# EUROPEAN PATENT APPLICATION

(11) **EP 3 616 979 A1**
(43) Date of publication of application: **04.03.2020**
(21) Application number: 19192659.1
(22) Date of filing: 20.08.2019
(51) Int. Cl.: B60N 2/00, B60N 2/02, B60N 2/809, B60N 2/829, B60N 2/832

(54) **AUTO STOWING AND DEPLOYING VEHICLE HEADREST**

(30) Priority: 21.08.2018 US 201862720577 P
(71) Applicant: Windsor Machine and Stamping 2009 Ltd, Windsor, Ontario N9H 2N2 (CA)
(72) Inventor: Little, Mark, Windsor, Ontario N9A 2N2 (CA)
(74) Representative: Manitz Finsterwald Patent- und Rechtsanwaltspartnerschaft mbB

(57) **Abstract**

A headrest assembly for use in a motor vehicle is provided. The headrest assembly includes a housing (11). The headrest assembly also includes an adjustment component (14) operatively coupling the housing to a seatback of a vehicle seat. The headrest assembly further includes an actuator (18) including a motor operatively coupled to the adjustment component, the motor effectuating movement of the housing between a deployed position and a stowed position. The headrest assembly yet further includes a sensor (26) for detecting the presence of an occupant on the vehicle seat, wherein the detection of an occupant on the vehicle seat causes the actuator to move the housing from the stowed position to the deployed positon.

## Description

### CROSS-REFERENCE TO RELATED APPLICATION

This U.S. Patent Application claims the benefit of and priority to U.S. Provisional Patent Application Serial No. 62/720,577, filed on August 21, 2018, titled "Auto Stowing and Deploying Vehicle Headrest," the entire disclosure of which is hereby incorporated by reference.

### BACKGROUND OF THE DISCLOSURE

### 1. Field of the Invention

The present invention relates to vehicle headrests and, more particularly, to a headrest having a deployed position and a stowed position.

### 2. Related Art

This section provides background information related to the present disclosure which is not necessarily prior art.

Technological improvements of vehicles have generally been focused on enhancements to features including efficiency, safety, and comfort. In a race to improve these features, certain matters of conveniences are often overlooked. These technological conveniences not only make an occupant's travel experience more enjoyable, they tangentially result in improvements to efficiency, safety, and comfort. More specifically, a more enjoyable travel experience results in longer periods of driving between stops and can also encourage less movement of occupants during travel.

One example feature of a vehicle that has historically been employed only for safety and comfort is a headrest. Most vehicles include headrests atop an occupant's seat and in a position adjacent the occupant's head. Typical headrests decrease the forward viewing area of any rear seat occupants (e.g., through the front windshield) and present an obstacle to the front seat occupants, especially the driver, when viewing the rear view mirrors (e.g., referring to the headrests located on the rear seats). Additionally, the headrest is a seat extension by design, thus adding to the volume occupied by the seat, and thereby subtracts from the available cargo space in a vehicle. This can be a potential problem when attempting to load large or irregularly shaped cargo (e.g., lumber, skis and/or the like) into the interior of the vehicle, which can have a tendency to strike the headrest. Because unoccupied headrests have historically taken up space and accommodating user preferences with occupied headrests have been limited to manual adjustment, there is a continuing desire to provide additional functionality to the headrest.

### SUMMARY OF THE DISCLOSURE

This section provides a general summary of the disclosure and is not to be interpreted as a complete and comprehensive listing of all of the objects, aspects, features and advantages associated with the present disclosure.

According to one aspect of the disclosure, a headrest assembly for use in a motor vehicle is provided. The headrest assembly includes a housing. The headrest assembly also includes an adjustment component operatively coupling the housing to a seatback of a vehicle seat. The headrest assembly further includes an actuator including a motor operatively coupled to the adjustment component, the motor effectuating movement of the housing between a deployed position and a stowed position. The headrest assembly yet further includes a sensor for detecting the presence of an occupant on the vehicle seat, wherein the detection of an occupant on the vehicle seat causes the actuator to move the housing from the stowed position to the deployed positon.

According to another aspect of the disclosure, a method of controlling the movement of a housing of a headrest assembly between a stowed position and a deployed position with a microprocessor is provided. The method includes sensing weight on a vehicle seat above a predetermined threshold. The method also includes moving the housing from a stowed position to a deployed position in response to the sensed weight.

According to yet another aspect of the disclosure, a vehicle including a plurality of vehicle seats that each include a headrest assembly is provided. Each of the headrest assemblies includes a housing. Each headrest assembly also includes an adjustment component operatively coupling the housing to a seatback of the vehicle seat. Each of the headrest assemblies further includes an actuator including a motor operatively coupled to the adjustment component, the motor effectuating movement of the housing between a deployed position and a stowed position, the stowed position defined by disposal of at least a portion of the housing within a recess of the seatback.

### BRIEF DESCRIPTION OF THE DRAWINGS

The drawings described herein are for illustrative purposes only of selected embodiments and are not intended to limit the scope of the present disclosure. The inventive concepts associated with the present disclosure will be more readily understood by reference to the following description in combination with the accompanying drawings wherein:
Figure 1 is a perspective view of a headrest assembly in a deployed position;
Figure 2 is a perspective view of a headrest assembly in a stowed position;
Figure 3 is a side view of the headrest assembly in the deployed position in accordance with another aspect of the disclosure;
Figure 4 is a side view of the headrest assembly of Figure 3 in the stowed position;
Figure 5 is a side view of the headrest assembly in the deployed position in accordance with yet another aspect of the disclosure;
Figure 6 is a side view of the headrest assembly of Figure 5 in the stowed position;
Figure 7 is a schematic view of electrical and mechanical components of the headrest assembly; and
Figure 8 is a method flow chart including steps in accordance with the application of the headrest assembly.

### DESCRIPTION OF THE ENABLING EMBODIMENTS

Example embodiments will now be described more fully with reference to the accompanying drawings. In general, the subject embodiments are directed to a headrest assembly for a vehicle that includes a deployed position and a stowed position. However, the example embodiments are only provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

Referring to the Figures, wherein like numerals indicate corresponding parts throughout the views, the headrest assembly is intended for providing an enhanced travel experience to occupants of a vehicle via incorporation of a headrest that is automatically moveable between a stowed position and a deployed position thus removing the visible and physical obstruction of headrests associated with seats that are not occupied.

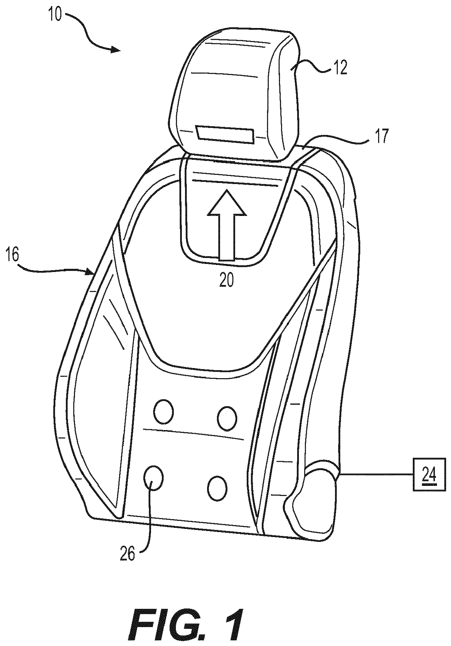

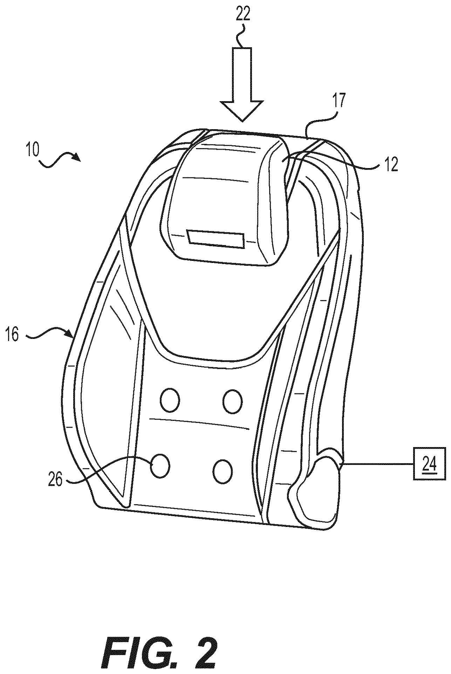

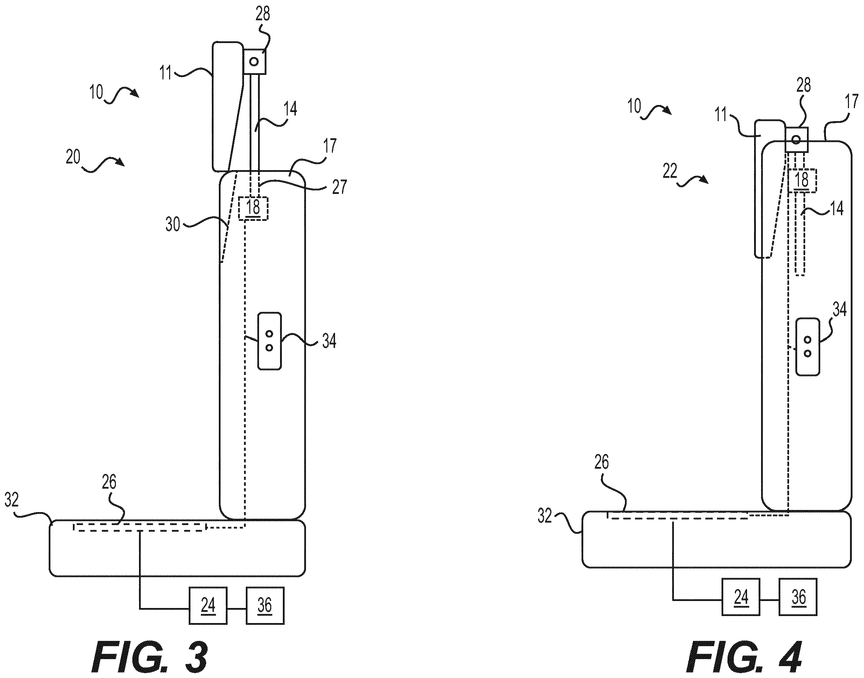

With initial reference to Figures 1 and 2, a headrest assembly is depicted. The headrest assembly is generally referred to with numeral 10. The headrest assembly 10 includes a housing 11 (Figures 3 and 4) that may at least partially enclose several components associated with stabilization and/or adjustment of the headrest assembly 10. The headrest assembly 10 further includes a cushion and a cover 12 provided over the housing 11 for aesthetic purposes and occupant comfort. A base portion 14 (which may also be referred to as an "adjustment component") operably connects the headrest assembly 10 to a vehicle seat 16 and, more specifically, to the upper portion 17 of the seatback of the vehicle seat 16.

The seat 16 partially encloses at least one actuator 18 (Figures 3 and 4) which can be used to adjust, stow, or deploy the headrest assembly 10 via movement of the adjustment component 14. The type of actuator 18 may vary depending upon the particular application of use. In some embodiments, the actuator 18 comprises one or more motors operatively coupled to the adjustment component 14 that facilitates vertical adjustment of the headrest assembly 10. While the actuator 18 is located within the seat 16 in some embodiments, it is contemplated that at least a portion of the actuator 18 may be placed within the housing 11.

The actuator 18 moves the headrest assembly 10 between a deployed position 20 (Figure 1) and a stowed position 22 (Figure 2). Movement of the headrest assembly 10 may be initiated either via an input command by a vehicle occupant or, as will be described in greater detail below, in an automated manner via input from at least one controller 24. The controller 24 is in operative communication (i.e., wired or wireless) with at least one weight sensor 26 that detects whether an occupant is seated on the vehicle seat 16. In some embodiments, the weight sensor(s) 26 are located within the vehicle seat 16, such as within the seatback (Figures 1 and 2) or within the seat bottom (Figures 3 and 4). It is contemplated that other detection devices in the vehicle seat 16 or in other portions of the vehicle may be employed to determine if an occupant is in the vehicle seat 16.

Referring to Figure 2, the headrest assembly 10 is illustrated in the stowed positon 22. While the illustrated stowed position 22 shows the headrest assembly 10 in front of the seatback, alternative stowed positions may be employed, including but not limited to, behind the seat 16 or within a recess or cavity of the upper seatback. The headrest assembly 10 may be moved between the deployed position 20 and the stowed position 22 via translation and/or rotation, with example embodiments described below.

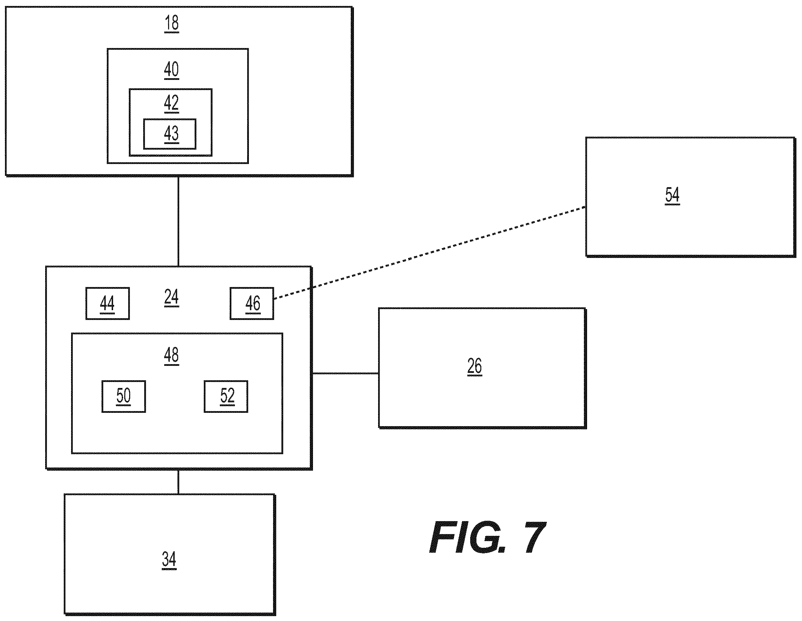

Figures 3 and 4 illustrate the headrest assembly 10 in accordance with an embodiment of the disclosure. The headrest assembly 10 connects to the upper portion 17 of the seat 16 via the adjustment component 14, which is illustrated as a moveable shaft with a toothed rack portion 27. More particularly, the headrest assembly 10 includes a pivot connection 28 connected to the housing 11 and the adjustment component 14 that allows the housing 11 to tilt with respect to the seat 16. The actuator 18 is located within the seat 16 and effectuates axial movement of the adjustment component 14 and may further be configured to adjust the tilt of the pivot connection 28 via an internal motor in the pivot connection. For example, the headrest assembly 10 may be moveable via a rack and pinion arrangement with interconnection of teeth on the rack portion 27 of the adjustment component 14 with a rotating gear (pinion portion 43 of Figure 7) in the actuator 18. The seatback of the seat 16 includes a recess 30 that receives at least part of the headrest assembly 10 in the stowed position 22. The housing 11 is preferably wedge-shaped such that it fits within recess 30 without projecting too far out. It should be appreciated that a cushion and/or cover 12 may encase the pivot connection 28. The weight sensor 26 is located in a seat bottom 32 and is in communication with the controller 24 to automatically initiate movement of the headrest assembly 10 from the stowed position 22 to the deployed position 20 upon a predetermined weight reading, for example, 25lbs., 50lbs., 75lbs or any other weight threshold that is suitable for each application of use. Once the predetermined weight reading is reached, the controller 24 commands the actuator 18 to move the adjustment component 14. In addition to the weight sensor 26, each seat 16 and/or a location adjacent to the driver's seat may also be equipped with a user interface 34 that allow refined movement between positions 20, 22. By using the interface 34, the deployed position 20 can be slightly adjusted for a particular occupant's preference. The actuator 18, the user interface 34, and the controller 24 are all operably connected to each other and a power source 36. The power source 36 is connected to a vehicular electrical system.

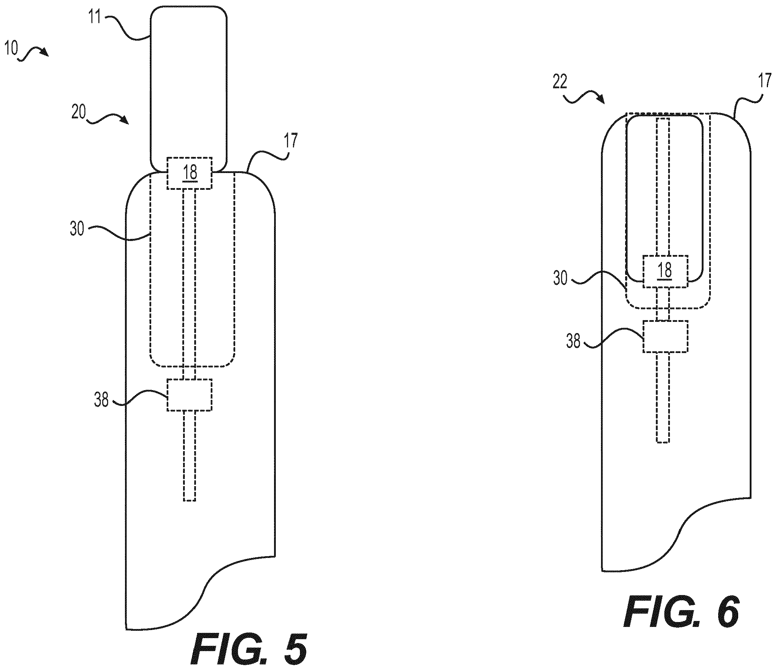

Figures 5 and 6 illustrate the headrest assembly 10 in accordance with yet another embodiment. While operating similarly to the previous embodiments, the headrest assembly 10 can be completely stowed within the recess 30 of the seat 16 such that the top of the headrest assembly 10 is flush with or recessed below the upper portion 17 of the seatback. In addition, it is noted that the actuator 18 of the illustrated embodiment is located at least partially within the headrest assembly 10. An additional supporting structure 38 is included to prevent radial movement of the adjustment component 14.

Figure 7 is a schematic representation of various electrical and mechanical components of the headrest assembly 10. The various elements provided therein allow for a specific implementation. Thus, one of ordinary skill in the art of electronics and circuits may substitute various components to achieve a similar functionality. The controller 24 dictates certain settings of the headrest assembly 10, such as when to move the headrest assembly 10 between positions 20, 22. The controller 24 receives information from the weight sensor 26 and/or the user interface 34 and initiates the actuator 18 based on certain feedback. The actuator 18 includes an electric motor 40 which may include a gear reduction unit 42 having a pinion portion 43 meshed with the rack portion 27 of the adjustable component 14. The controller 24 includes a microprocessor 44, a communications module 46, and a memory 48 having machine readable non-transitory storage. Programs and/or software 50 are saved on the memory 48. As will be described below, profile data 52 of a user may also be stored on the memory 48. The microprocessor 44 carries out instructions based on the software 50, for example, lowering the headrest assembly 10 into the stowed position 22 after a preset time interval without any weight readings above the predetermined threshold. Software 50 may be updated via the transmission of information between the communications module 46 and one or more computing devices 54. For example, the computing device 54 may be a paired mobile device such as mobile phone, tablet, laptop or wearable technology. Using the interface 34 and or the computing device 54, a user may save his or her weight and a preferred headrest assembly 10 deployed position 20 into the storage 48 as the profile data 52. As such, once the weight sensor 26 reads a weight within a certain percentage of the profile data 52 (for example 10%), it moves the headrest assembly 10 to a deployed position 20 corresponding to that user's preferences, e.g., vertical and tilt positions of the headrest assembly 10 in the deployed position 20. Regardless of any stored user preferences, the embodiments described herein do not move the headrest assembly 10 to the fully stowed position 22 if any occupant is detected in the seat 16 to ensure that the safety advantages of the headrest assembly 10 are available during operation of the vehicle.

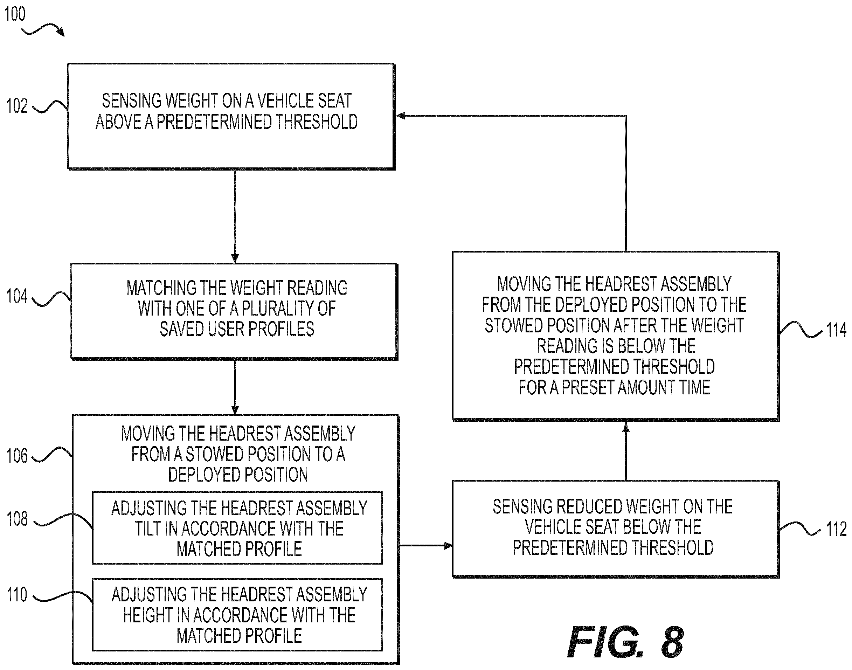

A software implemented method 100 that includes steps associated with stowing and deploying a headrest assembly in a vehicle is presented in Figure 8. The method 100 may be implemented by the microprocessor and initially includes a step of sensing weight on a vehicle seat above a predetermined threshold 102. The method 100 continues by matching the weight reading with one of a plurality of saved user profiles 104. The method 100 then moves the headrest assembly 106 from a stowed position to a deployed position. The step of moving the headrest assembly 106 may include adjusting the headrest assembly tilt in accordance with the matched profile 108 and may further include adjusting the headrest assembly height in accordance with the matched profile 110. Weight readings are continually monitored and the method 100 continues by sensing a reduction in weight on the vehicle seat below the predetermined threshold 112. After sensing the reduction in weight, the method 100 moves the headrest assembly from the deployed position to the stowed position once the weight reading has been below the predetermined threshold for a preset amount of time 114.

It is to be understood that the movement of the headrest assembly 10 can be limited to a vertical translating motion, such that more complex rotational adjustment mechanisms are not required. Advantageously, the headrest assembly 10 can remain in a stowed position 22 when not in use allowing for decreased visual obstruction and increased cargo space. When needed the headrest assembly 10 can be automatically placed into a deployed position 20 for the safety and comfort of the driver and vehicle passengers.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A headrest assembly for use in a motor vehicle comprising:
a housing;
an adjustment component operatively coupling the housing to a seatback of a vehicle seat;
an actuator including a motor operatively coupled to the adjustment component, the motor effectuating movement of the housing between a deployed position and a stowed position; and
a sensor for detecting the presence of an occupant on the vehicle seat, wherein the detection of an occupant on the vehicle seat causes the actuator to move the housing from the stowed position to the deployed positon.

2. The vehicle headrest assembly of Claim 1, wherein the housing is always in the stowed position when an occupant is not detected on the vehicle seat.

3. The vehicle headrest assembly of Claim 1, wherein the sensor includes a weight sensor located in the vehicle seat.

4. The vehicle headrest assembly of Claim 3, wherein the weight sensor is located in the seatback of the vehicle seat.

5. The vehicle headrest assembly of Claim 3, wherein the weight sensor is located in a seat bottom of the vehicle seat.

6. The vehicle headrest assembly of Claim 3, wherein the weight sensor has a predetermined threshold of weight before it detects the presence of an occupant on the vehicle seat.

7. The vehicle headrest assembly of Claim 1, wherein the vehicle seat defines a recess and the housing is at least partially located within the recess in the stowed position.

8. The vehicle headrest assembly of Claim 1, wherein the adjustment component includes a shaft including a rack portion and the motor includes a pinion portion.

9. The vehicle headrest assembly of Claim 1, wherein the housing is translated by the actuator between the deployed position and the stowed position.

10. The vehicle headrest assembly of Claim 1, wherein the housing is rotated by the actuator between the deployed position and the stowed position.

11. A method of controlling the movement of a housing of a headrest assembly between a stowed position and a deployed position with a microprocessor, the microprocessor configured to perform the steps of:
sensing weight on a vehicle seat above a predetermined threshold; and
moving the housing from a stowed position to a deployed position in response to the sensed weight.

12. The method of Claim 11, wherein the microprocessor is further configured to match the sensed weight with one of a plurality of saved user profiles.

13. The method of Claim 11, further comprising:
sensing a reduced weight on the vehicle seat below the predetermined threshold; and moving the housing from the deployed position to the stowed position after the weight reading is below the predetermined threshold for a preset amount of time.

14. A vehicle including a plurality of vehicle seats that each include a headrest assembly, each of the headrest assemblies comprising:
a housing;
an adjustment component operatively coupling the housing to a seatback of the vehicle seat; and
an actuator including a motor operatively coupled to the adjustment component, the motor effectuating movement of the housing between a deployed position and a stowed position, the stowed position defined by disposal of at least a portion of the housing within a recess of the seatback.

15. The vehicle of Claim 14, further including a weight sensor located in the vehicle seat for detecting the presence of an occupant on the vehicle seat, wherein the detection of an occupant on the vehicle seat causes the actuator to move the housing from the stowed position to the deployed positon.
